# EUROPEAN PATENT SPECIFICATION

(11) **EP 1 719 995 B1**
(45) Date of publication and mention of the grant of the patent: **02.01.2008**
(21) Application number: 05425294.5
(22) Date of filing: 04.05.2005
(51) Int. Cl.: G01M 1/22, G01M 1/32, F16F 15/32, F04D 29/66

(54) **Equipment for automatically balancing ventilation units for vehicles**
Automatische Auswuchtvorrichtung für Fahrzeuggebläse
Dispositif d'équilibrage automatique de ventilateurs pour véhicules

(43) Date of publication of application: 08.11.2006
(73) Proprietor: DENSO THERMAL SYSTEMS S.p.A., 10046 Poirino (Torino) (IT)
(72) Inventor: Allione, Lorenzo c/o Denso Thermal Systems S.p.A., 10046 Poirino (Torino) (IT); De Ieso, Mauro c/o Denso Thermal Systems S.p.A., 10046 Poirino (Torino) (IT)
(74) Representative: Marchitelli, Mauro

(56) References cited:
- EP-A- 0 781 928
- EP-A- 1 148 249
- WO-A-01/50022
- US-A- 4 628 733
- US-A- 5 505 083

## Description

The present invention relates to an equipment for automatically balancing ventilation units for vehicles.

A ventilation unit for vehicles comprises the following main components:
- a support made of plastic material,
- an electric motor fastened to the support made of plastic material and provided with an electrical power supply connector, and
- a centrifugal fan fastened on the shaft of the electric motor and provided with a plurality of blades made of plastic material.

The operation of balancing a ventilation assembly comprises a measuring step during which the intensity and the phase of the imbalance vector of the rotating system are measured and a compensation step in which compensating weights are fastened to the fan in order to compensate the dynamic imbalance of the system.

US4628733 discloses an equipment for automatically balancing ventilation units for vehicles. A centrifugal fan is fastened on the shaft of an electric motor and supported by a gripping means. A balancing unit determines the values and the phase of the compensating weights to be applied on the ventilation unit, on the basis of a set of force transducers provided in the gripping means and on the basis of an optical device detecting the rotation of the ventilation unit.

In US4628733, a friction drive is used to rotate the ventilation unit during balancing.

The object of the present invention is to provide an alternative equipment that allows to perform the balancing operation in fully automatic fashion.

According to the present invention, said object is achieved by an equipment having the characteristics set out in the claims.

The present invention shall now be described in detail with reference to the accompanying drawings, provided purely by way of non limiting example, in which:
- Figure 1 is a plan view of an equipment according to the present invention,
- Figures 2 and 3 are perspective views from different angles showing a part of the equipment of Figure 1,
- Figure 4 is a perspective view showing in greater scale the detail indicated by the arrow IV in Figure 1.

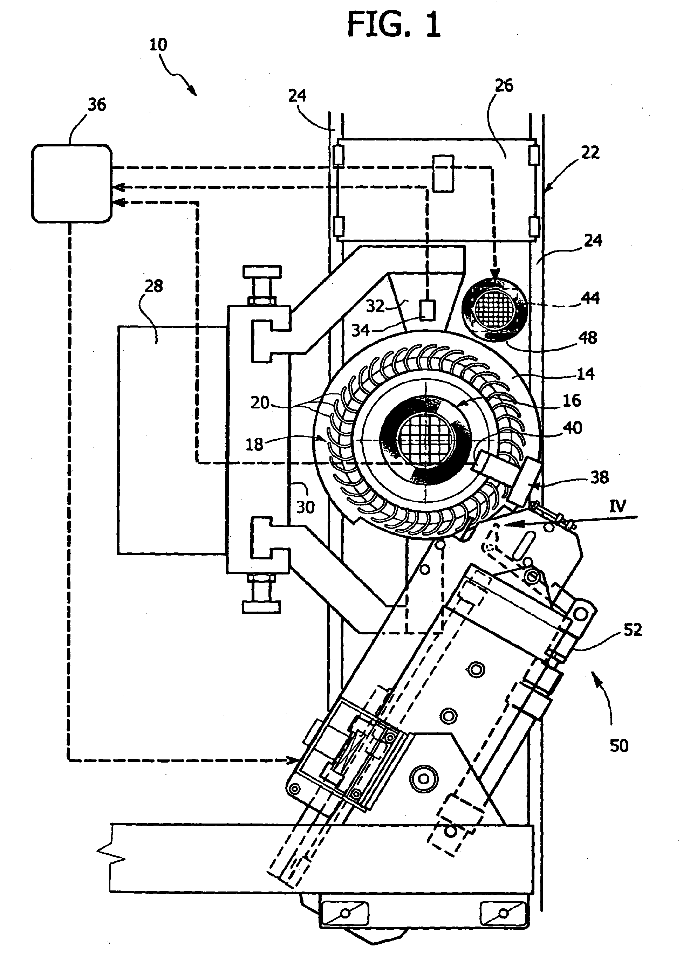

With reference to Figure 1, the reference number 10 globally designates an equipment for balancing ventilation units for vehicles.

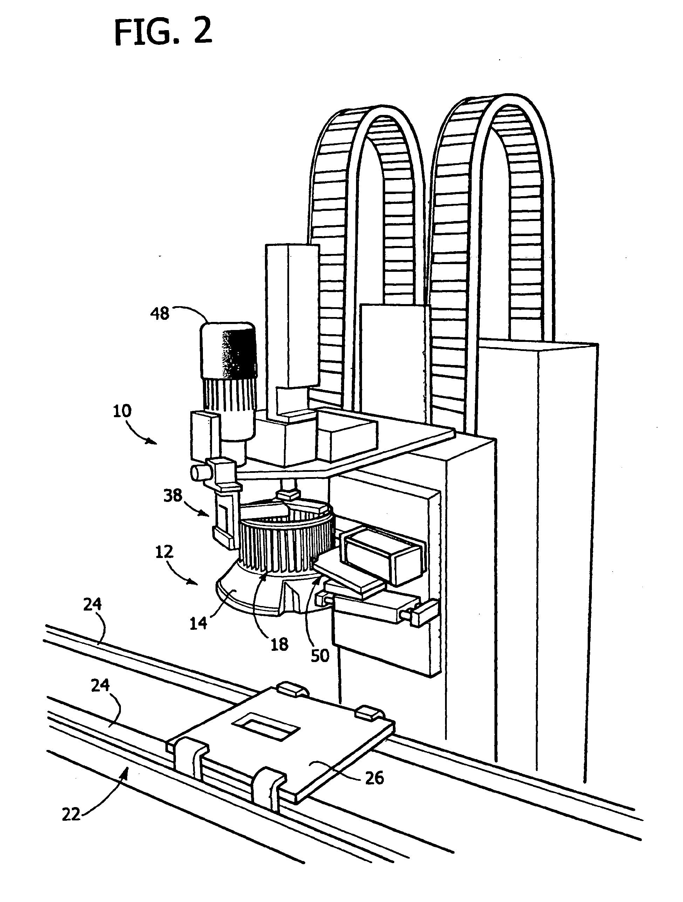

As shown in Figures 1 and 2, a ventilation unit 12 for vehicles comprises a support made of injection moulded plastic material 14, a direct current electric motor 16 and a centrifugal fan 18 provided with a plurality of blades 20 made of plastic material. In known fashion, the electric motor 16 is provided with an electrical power supply connector (not shown) accessible through an opening of the support 14.

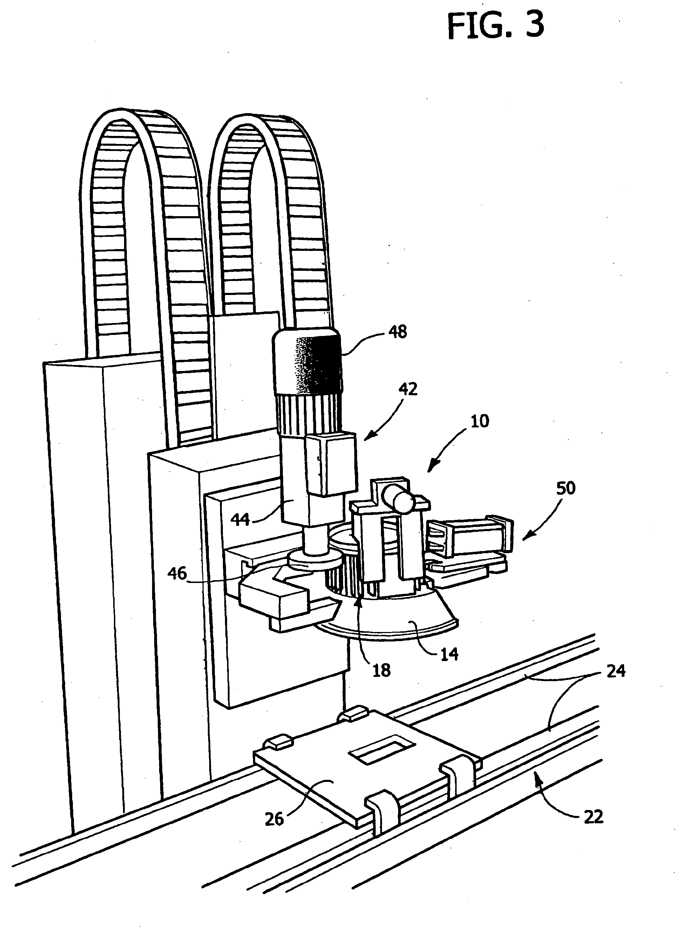

With reference to Figures 2 and 3, the number 22 designates an automatic line for transporting the ventilation units 12. The automatic line 22 comprises a horizontal rectilinear guide 24 and a plurality of carriages 26 each of which is able to carry a respective ventilation unit 12.

The balancing equipment 10 comprises a stationary support 28 positioned to the side of the transport line 22 and bearing a carriage 30, movable in the vertical direction. The carriage 30 bears two grip members 32 able to grip the case 14 of a ventilation unit 12. One of the two grip members 32 is provided with an electrical connector that, during the gripping of the support 14 of the ventilation unit 12, is coupled with a complementary electrical connector of the electric motor 16. Moreover, one of the grip members 32 is provided with sensor means for measuring the dynamic imbalance of the ventilation unit 12. Said sensor means can be constituted by force transducers, schematically designated by the reference number 34 in Figure 1, which generate an electrical signal indicating the dynamic imbalance of the ventilation unit 12. The electrical signal emitted by the force transducers 34 is sent to a balancing unit 36.

With reference in particular to Figure 2, the equipment 10 comprises an optical device 38 placed in a stationary position and able to detect, without contact, the passage of the blades of the fan 18. Preferably, the optical device 38 comprises a photoemitter and a photoreceiver positioned in such a way that the path of the beam that joins the photoemitter to the photoreceiver passes through the circumferential surface of the fan 18. In this way, every interruption of the beam between the photoemitter and the photoreceiver indicates the passage of a blade 20. The signal generated by the photoreceiver, designated by the reference 40 in Figure 1, is sent to the balancing unit 36.

With reference to Figure 3, the equipment 10 comprises a positioning device 42 comprising an electric motor 44 that actuates a positioning disk 46 that comes in contact with the lateral surface of the fan 18. The disk 46 can be moved between an inoperative position in which it is detached from the fan 18, and an operative position in which it is in contact with the fan 18. The motor 44 is associated to a position detector 48, e.g. an encoder. As shown schematically in Figure 1, the engine 44 is controlled by the balancing unit 36 to position the fan 18 in a pre-established position determined by the balancing unit 36 on the basis of the data processed during the imbalance measuring step.

The equipment 10 further comprises a device 50 for the automatic application of compensating weights to the fan 18. The device 50 comprises a stapler 52 built on the principle of normal commercial staplers of the kind used in office work or copy shops to join sheets of paper with metal staples. The stapler 52 is able to apply commercial metal staples, e.g. Zenith 24/6-24/8 with weight 0.05 - 0.062 grams, preferably galvanised. The stapler 52 is operated automatically and it is controlled by the balancing unit 36.

The staple 52 is movable between an inoperative position and an operative position. In the operative position, the stapler 52 is in a constant position. The positioning device 42 serves the purpose, under the control of the balancing unit 36, of positioning the fan 18 in such a way that the area in which the metallic compensating staples are to be applied is in correspondence with the stapler 52.

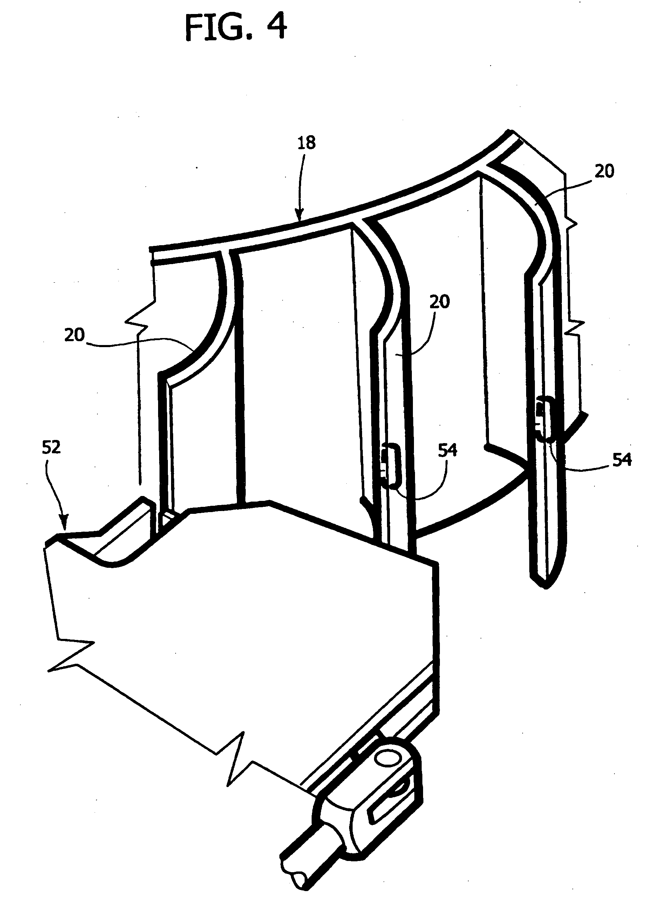

Figure 4 schematically shows the active part of the stapler 52. The stapler 52 is able to apply metallic staples 54 on the blades 20 of the fan 18. To prevent breaking or damaging the fan, the blades 20 of the fan 18 must be made of a material suitable to be penetrated by the metal staples 54 and they must have sufficiently small thickness. For example, the plastic material used to produce the fan 18 can be PP GF 30% and the recommended thickness for the blades 20 is less than 1.2 mm. The material previously used by the applicant to produce the fans 18 was the PA 30 GF. Said material was revealed to be unsuited for use in a method according to the present invention because the greater hardness has high likelihood of producing dangerous cracks during the application of the metal staples 54.

The operation of the device 10 is as follows.

The ventilation units 12 are moved along the transport line 22. The carriages 26 carrying the ventilation units 12 stop in sequence in the balancing station. The carriage 28 of the balancing equipment 10 is lowered and it grips the case 14 of a ventilation unit 12 by means of the grip members 34. During the gripping operation, the electrical connector present on one of the grip members 32 is coupled with the complementary connector of the electrical motor 16. The ventilation unit 12 is raised as shown in Figure 2 and the imbalance measuring step is started.

During this step the stapler 52 and the positioning device 44 are in an inoperative position. The electric motor 16 is driven to rotate at a measuring rate, e.g. in the order of 2500 rpm. During this step the force transducer 34 measures the intensity of the dynamic imbalance force and the optical device 38 measures the rate of rotation of the fan and the phase of the imbalance force. This information is acquired by the balancing unit 36 which determines, by known algorithms, the mass of the compensating weights to be applied to the fan 18 and the phase of the compensating weights.

The fan 18 is then stopped and the positioning device 42, under the control of the balancing unit 36, positions the fan 18 in such a way that the part of the fan 18 whereon are to be applied the compensating weights is situated at the area of action of the stapler 52.

The stapler 52 is then brought to operative position in which one of the blades 20 of the fan 18 is positioned between the anvil and the punch of the stapler 52. The stapler 52 then applies a metallic staple on the blade 20 as shown in Figure 4. If it is different to apply multiple points, they are applied on multiple adjacent blades. The same procedure is repeated on two compensating planes situated at the two opposite axial ends of the fan 18 to obtain a dynamic balancing of the fan 18.

At the end of the step of applying the compensating weights, the ventilation unit 12 is laid on the carriage 26 of the transport line and the cycle continues with a subsequent ventilation unit.

The equipment according to the present invention allows to balance the ventilation units in fully automatic fashion. It is also possible to apply the staples manually if the equipment jams or malfunctions. The metallic staples that replace the metal clips used in prior art systems are more economical and assure a more secure fastening.

## Claims

1. Equipment for automatically balancing ventilation units (12) for vehicles including:
- a support made of plastic material (14)
- an electric motor (16) fastened to said support (14) and provided with an electrical power supply connector, and
- a centrifugal fan (18) fastened on the shaft of the electric motor and provided with a plurality of blades (20) made of plastic material, the equipment further comprising:
- a gripping device (32, 34) able to grip the support made of plastic material (14), the gripping device (32, 34) being provided with sensor means (34) able to measure the dynamic imbalance of the ventilation unit (12), the gripping device (32, 34) being further provided with an electrical connector able to couple with the electrical connector of the motor during the gripping of the ventilation unit (12),
- an optical device (38) situated in stationary position and able to detect the passage of the blades (20) of the fan (18),
- a balancing unit (36) for determining the values and the phase of the compensating weights to be applied to the fan (18),
- a positioning device (42) able to position the fan (18) on the basis of information provided by said balancing unit (36), and
- a pneumatically operated stapler (50) for applying metal staples on the blades (20) of the fan (18) in positions determined by the balancing unit (36) .

2. Equipment as claimed in claim 1, **characterised in that** the stapler (50) can be moved between an inoperative position and an operative position, in the operative position the stapler (50) being in a constant position.

3. Equipment as claimed in claim 1, **characterised in that** the positioning device (42) comprises a disk (46) able to come in contact with the lateral surface of the fan (18), the positioning device (42) being able to be move between an inoperative position and an operative position.

4. Equipment as claimed in claim 1, **characterised in that** the gripping device (32, 34) can be moved in the vertical direction.

5. Equipment as claimed in claim 1, **characterised in that** the optical device (38) comprises a photoemitter and a photoreceiver positioned in such a way that the beam directed from the photoemitter to the photoreceiver intercepts the path of the blades (20) of the fan (18)

## Patentansprüche

1. Vorrichtung zum automatischen Herstellen von Gleichgewicht zwischen Lüftungseinheiten (12) für Fahrzeuge, die enthält:
einen Träger, der aus Kunststoffmaterial (14) besteht,
einen Elektromotor (16), der an dem Träger (14) befestigt und mit einem Stromzufuhrverbinder versehen ist, und
einen Zentrifugallüfter (18), der an der Welle des Elektromotors befestigt und mit einer Vielzahl von Flügeln (20) versehen ist, die aus Kunststoffmaterial bestehen,
wobei die Vorrichtung des Weiteren umfasst:
eine Greifeinrichtung (32, 34), die den aus Kunststoffmaterial (14) bestehenden Träger ergreifen kann, wobei die Greifeinrichtung (32, 34) mit einer Sensoreinrichtung (34) versehen ist, die das dynamische Ungleichgewicht der Lüftungseinheit (12) messen kann, und die Greifeinrichtung (32, 34) des Weiteren mit einem elektrischen Verbinder versehen ist, der während des Ergreifens der Lüftungseinheit (12) mit dem elektrischen Verbinder des Motors gekoppelt werden kann,
eine optische Einrichtung (38), die sich in einer stationären Position befindet und den Durchgang der Flügel (20) des Lüfters (18) erfassen kann,
eine Ausgleichseinheit (36), die die Werte und die Phase der an dem Lüfter (18) anzubringenden Ausgleichsgewichte bestimmt,
eine Positioniereinrichtung (42), die den Lüfter (18) auf Basis von durch die Ausgleichseinheit (36) bereitgestellten Informationen positionieren kann, und
einen pneumatisch betätigten Tacker (50), der an durch die Ausgleichseinheit (36) bestimmten Positionen Metallklammern an den Flügeln (20) des Lüfters (18) anbringt.

2. Vorrichtung nach Anspruch 1, **dadurch gekennzeichnet, dass** der Tacker (50) zwischen einer Ruheposition und einer Arbeitsposition bewegt werden kann, wobei sich der Tacker (50) in der Arbeitsposition in einer konstanten Position befindet.

3. Vorrichtung nach Anspruch 1, **dadurch gekennzeichnet, dass** die Positioniereinrichtung (42) eine Scheibe (46) umfasst, die mit der Seitenfläche des Lüfters (18) in Kontakt kommen kann, wobei die Positioniereinrichtung (42) sich zwischen einer Ruheposition und einer Arbeitsposition bewegen kann.

4. Einrichtung nach Anspruch 1, **dadurch gekennzeichnet, dass** die Greifeinrichtung (32, 34) in der vertikalen Richtung bewegt werden kann.

5. Einrichtung nach Anspruch 1, **dadurch gekennzeichnet, dass** die optische Einrichtung (38) einen Fotoemitter und einen Fotoempfänger umfasst, die so positioniert sind, dass der von dem Fotoemitter auf den Fotoempfänger gerichtete Strahl den Weg der Flügel (20) des Lüfters (18) schneidet.

## Revendications

1. Equipement destiné à équilibrer automatiquement des unités de ventilation (12) pour véhicules, comprenant :
- un support constitué de matière plastique (14)
- un moteur électrique (16) fixé audit support (14) et pourvu d'un connecteur d'alimentation électrique, et
- un ventilateur centrifuge (18) fixé sur l'arbre du moteur électrique et pourvu d'une pluralité de pales (20) constituées de matière plastique, l'équipement comprenant en outre :
- un dispositif de saisie (32, 34) capable de saisir le support constitué de matière plastique (14), le dispositif de saisie (32, 34) étant pourvu d'un moyen formant capteur (34) capable de mesurer le déséquilibre dynamique de l'unité de ventilation (12), le dispositif de saisie (32, 34) étant pourvu en outre d'un connecteur électrique capable de se coupler avec le connecteur électrique du moteur pendant la saisie de l'unité de ventilation (12),
- un dispositif optique (38) situé en position stationnaire et capable de détecter le passage des pales (20) du ventilateur (18),
- une unité d'équilibrage (36) destinée à déterminer les valeurs et la phase des poids de compensation à appliquer au ventilateur (18),
- un dispositif de positionnement (42) capable de positionner le ventilateur (18) sur la base d'informations fournies par ladite unité d'équilibrage (36), et
- une agrafeuse actionnée pneumatiquement (50) destinée à appliquer des agrafes en métal sur les pales (20) du ventilateur (18) dans des positions déterminées par l'unité d'équilibrage (36).

2. Equipement selon la revendication 1, **caractérisé en ce que** l'agrafeuse (50) peut être déplacée entre une position inopérationnelle et une position opérationnelle, l'agrafeuse (50) étant en position constante dans la position opérationnelle.

3. Equipement selon la revendication 1, **caractérisé en ce que** le dispositif de positionnement (42) comprend un disque (46) capable de venir en contact avec la surface latérale du ventilateur (18), le dispositif de positionnement (42) étant capable d'être déplacé entre une position inopérationnelle et une position opérationnelle.

4. Equipement selon la revendication 1, **caractérisé en ce que** le dispositif de saisie (32, 34) peut être déplacé dans la direction verticale.

5. Equipement selon la revendication 1, **caractérisé en ce que** le dispositif optique (38) comprend un photoémetteur et un photorécepteur positionnés de telle manière que le faisceau dirigé du photoémetteur au photorécepteur intercepte le trajet des pales (20) du ventilateur (18).
